# EUROPÄISCHE PATENTSCHRIFT

(11) **EP 0 363 314 B1**
(45) Veröffentlichungstag und Bekanntmachung des Hinweises auf die Patenterteilung: **11.05.1994**
(21) Anmeldenummer: 89810700.8
(22) Anmeldetag: 18.09.1989
(51) Int. Cl.: C22B 7/00, C22B 11/02, C22B 3/06, C25B 1/00

(54) **Verfahren und Vorrichtung zur Rückgewinnung von Katalysatorsubstanzen**
Process and device for recovering catalyst constituents
Procédé et dispositif pour récupérer des composants de catalysateurs

(30) Priorität: 19.09.1988 CH 3487/88
(43) Veröffentlichungstag der Anmeldung: 11.04.1990
(73) Patentinhaber: CGB CONSULTING GRUPPE BADEN Dr.-Ing. WALTHER AG, CH-5400 Baden (CH)
(72) Erfinder: Frauenknecht, Hana, Dr.sc.nat., CH-5443 Niederrohrdorf (CH); Walther, Gert Ulrich, Dr.-Ing., CH-5300 Turgi (CH)
(74) Vertreter: Frauenknecht, Alois J.

(56) Entgegenhaltungen:
- EP-A- 0 039 873
- EP-A- 0 221 187
- EP-A- 0 247 852
- EP-A- 0 250 103
- EP-A- 0 288 344
- DE-A- 1 954 707
- FR-A- 493 939
- FR-A- 635 804
- FR-A- 834 870
- FR-A- 881 946
- GB-A- 2 181 452
- METALS ABSTRACTS, März 1984, Seite 123, Zusammenfassung Nr. 43-0058; J. LÖBEL et al.: "Problems and possibilities for treatment of secondary raw materials containing noble metals"
- METALS ABSTRACTS, August 1982, Seite 153, Zusammenfassung Nr. 43-0247; N.N. AVERINA et al.: "Treatment of cadmium-bearing wastes from the chemical industry"
- PATENT ABSTRACTS OF JAPAN, Band 1, Nr. 4, 11. Mai 1977, Seite 122 C 77; & JP-A-52 7322
- PATENT ABSTRACTS OF JAPAN, Band 6, Nr. 191 (C-127)[1069], 30. September 1982, Seite 110 C 127; & JP-A-57 104 681
- PATENT ABSTRACTS OF JAPAN, Band 8, Nr. 162 (C-235)[1599], 26. Juli 1984, Seite 125 C 235; & JP-A-59 64 721
- PATENT ABSTRACTS OF JAPAN, Band 11, Nr. 398 (C-466)[2845], 25. Dezember 1987, Seite 91 C 466; & JP-A-62 158 833
- PATENT ABSTRACTS OF JAPAN, Band 5, Nr. 24 (C-43)[696], 13. Februar 1981, Seite 147 C 43; & JP-A-55 152 137
- PATENT ABSTRACTS OF JAPAN, Band 8, Nr. 236 (C-249)[1673], 30. Oktober 1984, Seite 33 C 249; & JP-A-59 116 338
- PATENT ABSTRACTS OF JAPAN, Band 10, Nr. 31 (C-327)[2088], 6. Februar 1986, Seite 133 C 327; & JP-A-60 184 647

## Beschreibung

Die Erfindung betrifft ein Verfahren zur Rückgewinnung von Katalysatorsubstanzen und eine Vorrichtung zur Rückgewinnung von Katalysatorsubstanzen.

Katalysatorsubstanzen, insbesondere Katalysatormetalle und -metalloxide, werden seit längerer Zeit für die Beschleunigung chemischer Reaktionen in der chemischen und petrochemischen Industrie eingesetzt. Obwohl die Katalysatorsubstanzen an sich keine chemischen Verbindungen mit den Reaktionspartnern eingehen, werden diese nach längerem Einsatz vergiftet. Es gilt nun, die auf einem Trägermaterial aufgebrachten Katalysatorsubstanzen, insbesondere Edelmetalle wie Platin, Rhodium, Palladium usw. oder andere wertvolle Metalle wie Vanadium, Molybdän, Wolfram oder Titan, wieder zurückzugewinnen. Auch das Trägermaterial soll möglichst wiederverwertet werden, damit die gesamthaft resultierende Umweltbelastung so gering wie möglich gehalten wird. Die in zunehmendem Masse in Autoabgas-Katalysatoren eingesetzten Edelmetalle, die zur katalytischen Nachverbrennung von Auspuffgasen dienen, müssen nach einer Betriebsdauer von etwa 80.000 bis 120.000 km ersetzt werden. Es sind daher verschiedene pyrometallurgische und nasschemische Verfahren zur Rückgewinnung von katalytischen Edelmetallen aus Keramiken bekannt.

Beispielsweise ist der in US-A-4 337 085 ein Verfahren beschrieben, das auf einem vollständigen Schmelzen des Katalysators basiert. Der Katalysator, der aus einem aluminiumoxidhaltigen Trägermaterial mit darauf enthaltenden Edelmetallen besteht, wird zerkleinert und in einem elektrischen Hochtemperatur-Ofen, wie einem Plasmabogen-Ofen, auf eine Temperatur von 2100°C erhitzt. Der anschliessende Schmelzvorgang hat eine zweifache Wirkung: Einerseits die Ausscheidung von Edelmetallen, die nach dem Erstarren Klümpchen bilden und aus der erstarrten Schmelze herausgebrochen werden, und andererseits die Rückgewinnung des aluminiumoxidhaltigen Trägermaterials. Dieses Schmelzverfahren muss mehrmals wiederholt werden, um eine genügend hohe Ausbeute an Edelmetallen zu erhalten.

Bei einem ähnlichen Rückgewinnungsverfahren von Metallen der Platingruppe werden das zerkleinerte Keramiksubstrat, ein oder mehrere Flussmittel und ein Sammlermaterial in einen Plasmabogen-Ofen eingefüllt und auf eine Temperatur von mindestens 1420°C erhitzt (GB-A-2 067 599). Es werden dadurch eine geschmolzene metallische Phase, die die erwähnten Metalle enthält, und eine geschmolzene Schlacke erzeugt. Die Metalle und die Schlacke werden getrennt, und die Metalle der Platingruppe werden nachträglich von der metallischen Phase extrahiert.

Die obengenannten Verfahren zur Rückgewinnung von Katalysatorsubstanzen sind sehr aufwendig und nur wegen des hohen Preises der Edelmetalle wirtschaftlich. Der Energiebedarf ist sehr hoch und es bedarf besonders geschultes Personal, um die Plasmabogen-Öfen wirtschaftlich betreiben zu können. Zudem ist ein kontinuierliches Verfahren ohne grossen apparativen Aufwand nicht möglich; die zurückgewonnenen Edelmetalle werden heute noch von Hand der erstarrten Schmelze entnommen.

Andererseits ist ein nasschemisches Verfahren zur Rückgewinnung von Metallen aus Raffineriekatalysatoren bekannt (US-A-4 585 628). Es basiert auf einer Oxidation der Metalle mit Komplexe bildenden Liganden unter Zugabe von Sauerstoff bei etwa 100°C. Die mit den Liganden gebundenen Metalle werden im Wasser oder in einem organischen Lösungsmittel extrahiert. Die gebundenen Edelmetalle werden nachträglich mit starken Alkali- oder Mineral-Säuren von den komplexen Verbindungen getrennt.

Bei diesem nasschemischen Verfahren werden teure Chemikalien benötigt; eine industriell-wirtschaftliche Anwendung ist sehr fraglich. Zudem ist eine grosse Umweltbelastung aufgrund der verwendeten Chemikalien zu erwarten.

Die Erfindung stellt sich daher die Aufgabe, ein Verfahren und eine Vorrichtung zur Rückgewinnung von Katalysatoren, insbesondere von auf einem Trägermaterial aufgebrachten Katalysatorsubstanzen zu schaffen. Dabei sollen diese Substanzen auf einfache und sehr wirtschaftliche Art zurückgewonnen werden, für die Umwelt soll nur eine geringe Belastung entstehen und die resultierenden Abfälle sollen sich zudem leicht entsorgen lassen.

Diese Aufgabe wird dadurch gelöst, dass die Katalysatorsubstanzen, durch eine niederfrequente Wechselspannung elektrolytisch von dem in einer sauren Lösung eingetauchten Katalysatorkörper gelöst werden, und wobei die gelösten Katalysatorsubstanzen und/oder der Katalysatorkörper zurückgewonnen werden.

Im Gegensatz zur konventionellen Elektrolyse wird gemäss Anspruch 1 eine Wechselspannung, in einem Elektrolyten, an die zu elektrolysierende Substanz angeschlossen.

Die Erfindung hat den grossen Vorteil, dass die Auflösung zur Rückgewinnung der Katalysatorsubstanzen in einem einzigen Verfahrensschritt, mit einer Wechselspannungsquelle und einer handelsüblichen Säure als Elektrolyt, bei geringem Energiebedarf durchgeführt werden kann. Dadurch ist eine besonders praktische und wirtschaftliche Handhabung des Verfahrens gewährleistet. Die Katalysatorkörper brauchen nicht wie bei den herkömmlichen Verfahren zertrümmert und/oder zerkleinert werden, sondern können direkt in den Elektrolyten eingetaucht werden. Die gesamte Verfahrenszeit ist zudem erheblich kürzer als die bei den bekannten pyrometallurgischen und nass-chemischen Verfahren.

Die erfindungsgemässe Vorrichtung zur Rückgewinnung von Katalysatoren besteht aus einem Elektrolyse-Gefäss und den darin enthaltenen zu behandelnden Katalysatoren, wobei in dem Elektrolyse-Gefäss zwei Elektroden vorgesehen sind, die von einer sauren Lösung chemisch nicht angreifbar sind und an die Form des Katalysatorkörpers angepasst und/oder derart verformbar sind, dass sie an die Form des Katalysatorkörpers anpassbar sind, wobei die Elektroden an eine niederfrequente Wechselspannungsquelle angeschlossen und in direktem galvanischen Kontakt mit den auf dem Katalysatorkörper befindlichen Katalysatorsubstanzen treten.

Die Elektroden der Vorrichtung gewährleisten stets einen optimalen elektrischen Kontakt mit dem Katalysatorkörper, so dass nunmehr eine semikontinuierliche Rückgewinnung möglich ist. Insbesondere können in einem weitgehend automatisierten Verfahren die Katalysatorkörper mit einem Roboter in den Elektrolyten eingetaucht werden und die Elektroden durch eine einfache Drehbewegung gegen das Trägermaterial gedrückt und dabei kontaktiert werden. Bei einer gleichbleibenden Form der Katalysatorkörper können fest vorgeformte Elektroden verwendet werden. Bei verschiedenen Formen der Katalysatorkörper sind jedoch verformbare Elektroden zu bevorzugen, da diese stets eine optimale elektrische Kontaktfläche mit dem Trägermaterial bilden.

In einer bevorzugten Weitergestaltung des erfindungsgemässen Verfahrens nach Anspruch 2 wird eine Wechselspannung konstanter Frequenz, vorzugsweise mit einer Netzfrequenz von 50 Hz oder 60 Hz, in direkten galvanischen Kontakt mit den auf dem Katalysatorkörper befindlichen Katalysatorsubstanzen gebracht.

In der Praxis hat sich herausgestellt, nach Anspruch 3, dass bei einer sicherheitstechnisch günstigen Spannungsamplitude unterhalb von 10 Volt die Verfahrensbedingungen optimal sind.

Für bestimmte Anwendungen, beispielsweise zur Rückgewinnung der Edelmetalle Gold und Palladium, ist gemäss Anspruch 4 eine Wechselspannung mit nur Halbwellen bevorzugt, weil damit eine höhere elektrochemische Auflösung während einer geringeren Reaktionszeit erreicht wird. Diese Wechselspannungen werden mit Vorteil, bei mehreren Vorrichtungen, einmal mit positiven und einmal mit negativen Halbwellen eingesetzt, wodurch asymmetrische Netzlasten, insbesondere in einem 3-Phasennetz, beim Austausch der Katalysatorkörper grösstenteils vermieden werden.

Gemäss Anspruch 5 haben sich vor allem saure Lösungen aus Salpetersäure, Schwefelsäure, Salzsäure oder Flussäure, oder auch Mischungen davon, als Elektrolyte bewährt. Zudem können dem Elektrolyten Zusätze zur Verringerung seines elektrischen Widerstandes beigefügt werden, wie sie aus der Gleichspannungselektrolyse bekannt sind.

Besonders geeignet ist Salzsäure oder eine Salzsäurelösung als Elektrolyt, weil die gelösten Katalysatorsubstanzen mit ihr Chloride bilden, die aufgrund ihrer guten Löslichkeit als Ausgangsmaterialien für Synthesen verwendet werden können. Ebenso sind sie für ein nachträgliches Aufkonzentrieren vorteilhaft.

Nach Anspruch 6 weisen diese sauren Lösungen bevorzugterweise eine Konzentration von 4 bis 10 N, insbesondere von 6 N, auf.

Das Verfahren hat sich ganz besonders bewährt für Auto-Katalysatoren, die gemäss Anspruch 7 aus einer Keramik, wie Aluminiumoxid, Mullit oder Spodumin, und darauf aufgebrachten Edelmetallen, wie Platin, Rhodium und Palladium, bestehen. Die den Katalysatorkörper umgebenden Hüllen bzw. Schutz- und Leitrohre werden vorteilhafterweise auf einer handelsüblichen Plasma- oder Laserschneidmaschine entfernt.

Zum Entfetten und Reinigen des Katalysatorkörpers ist, gemäss Anspruch 8, vor allem heisses Tetrachloräthylen und/oder Wasser mit einem Netzmittel günstig. Dabei bewähren sich, nach Anspruch 9, Reinigungsmethoden in Ultraschall-Bädern.

Um die Edelmetalle in ihrer festen Form zu erhalten, hat sich nach Anspruch 10 die Verwendung von unedlen Metallen, wie Zink, Aluminium oder Eisen, bewährt, damit die Edelmetalle nach der Elektrolyse reduziert werden und dadurch aus der sauren Lösung ausfallen.

Die Verwendung eines Ionenaustauscherharzes gemäss Anspruch 11 ist sehr geeignet, um die Katalysatorsubstanzen in fester Form zu erhalten. Dazu werden die gelösten Katalysatorsubstanzen mit dem Ionenaustauscherharz gebunden und dabei aufkonzentriert. Durch Verbrennen des Harzes lassen sich die Substanzen auf einfache Weise zurückgewinnen.

Nach Anspruch 12 können die Katalysatorsubstanzen auch besonders vorteilhaft mit einem gelösten Komplex- oder Chelat-Bildner aus dem Ionenaustauscherharz eluiert werden, wodurch sie konzentriert werden und für die weitere Verarbeitung und/oder Aufbereitung zur Verfügung stehen.

In einer bevorzugten Ausgestaltung der erfindungsgemässen Vorrichtung nach Anspruch 14 bestehen die Elektroden aus Graphitwolle, Graphitfasern oder Graphitgewebe und/oder Graphitstäben. Diese graphithaltigen Elektroden haben sich nämlich aufgrund ihrer Säurebeständigkeit ausgezeichnet bewährt. Der Vorteil von Graphitwolle, Graphitfasern oder von Graphitgewebe ist, dass die verwendete saure Lösung frei in dem Elektrolyse-Gefäss zirkulieren und somit zu den Katalysatorsubstanzen unbehindert gelangen kann.

Eine vorteilhafte Ausgestaltung wenigstens einer der Elektroden gemäss Anspruch 15 besteht darin, eine den Katalysatorkörper tragende Elektrode, eine Lochplatte aus Graphit, horizontal in dem Elektrolyse-Gefäss vorzusehen, welche Erhebungen aufweist, die mit den Katalysatorsubstanzen in direkten galvanischen Kontakt treten und durch deren Löcher der Elektrolyt zirkulieren kann.

Obwohl auch andere Rührmittel, wie Rührstab oder Magnetrührer, für die Umwälzung der sauren Lösung geeignet sind, ist bei grosstechnischen Anlagen besonders eine am ElektrolyseGefäss angeordnete umwälzende Pumpe, wie eine peristaltische Pumpe gemäss Anspruch 16, vorteilhaft, da diese eine gute Durchmischung der sauren Lösung und eine gleichmässige Benetzung der Katalysatorsubstanzen gewährleistet.

Für ein kontinuierliches oder semikontinuierliches Verfahren zur Rückgewinnung der Katalysatorsubstanzen ist die besondere Ausgestaltung der Vorrichtung nach Anspruch 17 bevorzugt geeignet, wobei vor der Pumpe eine Ableitung vorgesehen ist, die einen Teil der verbrauchten sauren Lösung für die Weiterverarbeitung der Katalysatorsubstanzen abführt, und wobei nach der Pumpe eine Zuleitung vorgesehen ist, die denselben Teil an frischer saurer Lösung wieder der Elektrolyse zuführt. Dies hat den grossen Vorteil, dass beim Austausch der Keramikkörper die saure Lösung oder Säure nicht erneuert werden muss, da stets genügend frische saure Lösung oder Säure vorhanden ist, um die Elektrolyse im Dauerbetrieb durchzuführen. - Somit lässt sich der Prozess automatisieren.

Weitere Vorteile der Erfindung folgen aus der nachstehenden Beschreibung. Die Erfindung wird anhand der in den Zeichnungen dargestellten Ausführungsbeispielen näher erläutert. Dabei zeigt:
- Fig. 1: eine erste Vorrichtung mit verformbaren Elektroden zur Rückgewinnung von Katalysatorsubstanzen von einem üblichen Auto-Abgaskatalysator, und
- Fig. 2: eine zweite Vorrichtung mit festen Elektroden zur Rückgewinnung der Katalysatorsubstanzen.

Das Verfahren zur Rückgewinnung von Katalysatorsubstanzen, der Edelmetalle Rhodium und Platin, wird wie folgt ausgeführt:
Ein Katalysator wird zunächst entmantelt, d.h. mittels einer Trennscheibe, eines Laser-Schneidgerätes oder durch einen Plasmastrahl wird seine Hülle entfernt und eine zwischen der Hülle und dem Keramikkörper stossdämpfende Schicht aus Stahlwolle manuell weggenommen. Der Keramikkörper wird nun mit heissem Tetrachloräthylen oder mit einem Netzmittel enthaltendem Wasser entfettet und gereinigt.

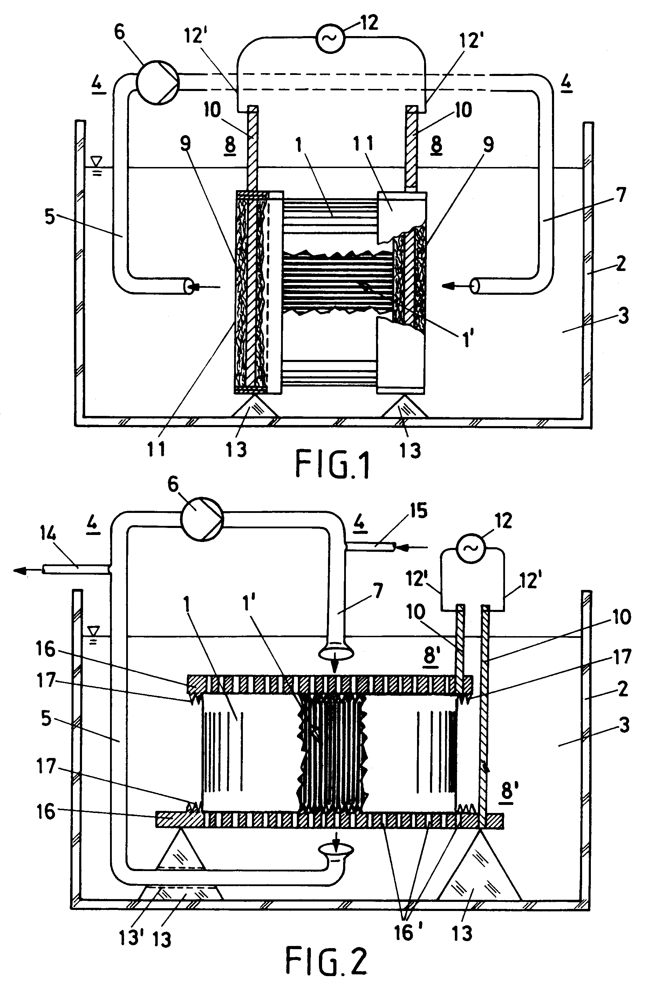

Der übrigbleibende Keramikkörper 1, vgl. Fig. 1, ein Keramikmonolith mit elliptischem Querschnitt, ist mit beschichteten rechteckigen Kanälen 1′ von 1 mm² lichter Weite und 75 mm Länge durchsetzt und wird stirnseitig mit den Elektroden 8 belegt.

Die vertikal angeordneten Elektroden 8 bestehen aus einem Bausch aus Graphitwolle 9, aus in die Graphitwolle hineingeführte Graphitstäbe 10 und aus die Graphitwolle 9 einschliessenden Halteringen 11. Die Halteringe 11 werden leicht über die äusseren Ränder des Keramikkörpers 1 gestülpt. Dadurch werden die Bausche aus Graphitwolle 9 gegen die Stirnseiten des Keramikkörpers 1 gedrückt, so dass deren äussere Fasern in die mit Edelmetall beschichteten rechteckigen Kanäle 1′ des Keramikkörpers 1 hineinragen und damit einen einwandfreien elektrischen Kontakt zwischen dem Keramikkörper 1 und den Elektroden 8 gewährleisten.

Die Bausche aus Graphitwolle 9 haben denselben elliptischen Querschnitt wie der Keramikkörper 1 und je eine Dicke von 2 cm. Der Haltering 11 besteht aus Polytetrafluoräthylen und ist der elliptischen Form des Keramikkörpers 1 angepasst. Die Graphitstäbe 10 haben einen Durchmesser von 6 mm und eine Länge von 15 cm, so dass sie genügend aus der Flüssigkeit im Elektrolyse-Gefäss 2 herausragen.

Die derart gestalteten Elektroden 8 sind über Kabel 12′ mit einer Wechselstromquelle 12 verbunden. Diese ist für eine maximale Spannungsamplitude von 10 Volt und für einen maximalen Strom von 50 A ausgelegt.

Um den Keramikkörper 1 auf dem Boden des Elektrolyse-Gefässes 2 abzustützen, sind zwei Stützen 13 aus einem säurebeständigen Material (Polytetrafluoräthylen) vorgesehen.

Der Keramikkörper 1 wird jetzt in das Elektrolyse-Gefäss 2 mit saurer Lösung 3 als Elektrolyt, hier Salzsäure mit einer Konzentration von 6 N, vollständig eingetaucht. Der Keramikkörper 1 ist mit seinen Stirnseiten zwischen den Enden einer Pumpleitung 4 angeordnet, die aus einem Abfuhrrohr 5, einer in die Leitung geschalteten peristaltischen Pumpe 6 und einem Zufuhrrohr 7 besteht.

Die peristaltische Pumpe 6 und die Wechselstromquelle 12 werden eingeschaltet. Die Pumpe 6 ist so eingestellt, dass die Säure 3 im gesamten Elektrolyse-Gefäss 2 ständig und gleichmässig umgewälzt wird, und so eine Elektrodenpolarisierung durch an den Elektroden 11 gelöste Kationen verhindert und die Säurekonzentration an den Elektrodenoberflächen konstant bleibt.

Die gemessene Spannung beträgt 3,5 Volt und der gemessene Strom 4,5 A; d.h. es resultierte eine Stromdichte von 0,04 A/cm², bezogen auf den Querschnitt der Keramik 1.

### Ergebnisse:

Nach einer Elektrolysedauer von 90 Minuten wurde eine Probe der Elektrolytlösung entnommen und durch Atomabsorption auf den Gehalt an gelösten Edelmetallen analysiert. Dabei wurden 25 µg Rhodium/ml und 120 µg Platin/ml festgestellt, d.h. pro Katalysatorkörper 72 mg Rhodium und 360 mg Platin. Nach insgesamt 4 Stunden wurde das Verfahren beendet; es wurden 60 µg Rhodium/ml und 195 µg Platin/ml, d.h. 180 mg Rhodium und 585 mg Platin, zurückgewonnen.

In Fig. 2 ist eine zweite Vorrichtung zur Rückgewinnung von Katalysatorsubstanzen dargestellt, die im Aufbau ähnlich ist wie die erste. Dieselben Elemente sind deshalb mit denselben Bezugszeichen versehen. Die horizontalen Elektroden 8′ bestehen hier aus Lochplatten 16 mit Durchlässen 16′ und Kontaktspitzen 17. Der Keramikkörper 1 wird hier zwischen die Lochplatten 16 geklemmt, so dass die Kontaktspitzen 17 in die beschichteten Kanäle 1′ des im Vergleich zu Fig. 1 um 90° gedrehten Keramikkörpers 1 hineinragen und die Katalysatorsubstanzen kontaktieren. Das Abfuhrrohr 5 ist in diesem Fall durch eine Bohrung 13′ in der linken Stütze 13 hindurchgeführt und unter dem Keramikkörper 1 angeordnet. Das Zufuhrrohr 7 ist nun oberhalb des Keramikkörpers 1 angeordnet.

In das Elektrolyse-Gefäss 2 wird der Elektrolyt eingefüllt. Der mit den Elektroden 8′ versehene Keramikkörper 1 wird vollständig in den Elektrolyt eingetaucht und auf die Stützen 13 gestellt. Die Elektroden 8′ werden dann an die Wechselstromquelle 12 angeschlossen, und die peristaltische Pumpe 6 und die Wechselstromquelle 12 werden eingeschaltet. - Die Elektrolyse erfolgt analog wie vorstehend beschrieben.

Zur weiteren Verarbeitung der zurückgewonnenen Edelmetalle Rhodium und Platin wird die Salzsäurelösung mit Natriumhydroxid neutralisiert, bis sich ein messbarer pH-Wert einstellt. Diese Lösung wird auf ein Kationenaustauscherharz geladen, beispielsweise auf ein Styrolharz mit sulphonat-aktiven Austausch-Gruppen oder auf einen chelatbildenden Kationenaustauscher mit aminodiacetat-aktiven Austausch-Gruppen. Als Styrolharze sind Amberlite 200 oder Dowex 50, und als chelatbildender Kationenaustauscher Dowex XF-4196 geeignet (alles eingetragene Warenzeichen). Alternativ zu dem Kationenaustauscher können auch starke Anionenaustauscherharze, wie Amberlite IRA 910 oder Dowex 1 (eingetragene Warenzeichen), verwendet werden, wobei die Salzsäure nicht neutralisiert werden muss, da die Edelmetalle in Form ihrer komplexen Chloridverbindungen auf den Anionenaustauscher gebunden werden.

Das Austauscherharz wird dann transportiert und am Verwendungsort bei einer Temperatur von 700 bis 1200°C in einem handelsüblichen Ofen verbrannt, wobei die Edelmetalle Rhodium und Platin in fester Form zurückbleiben. Dies hat den grossen Vorteil, dass die gebundenen Edelmetalle nicht in einer aggressiven, sauren Lösung, sondern in einer ungefährlichen festen Form, transportiert werden können.

Anstatt die Ionenaustauscher zu verbrennen, können die Edelmetalle auch mit einem starken Komplexbildner, z.B. mit einer Cyanid-Lösung, oder mit einem Chelat-Bildner, aus diesen eluiert werden. Dadurch können auch die Ionenaustauscherharze wiederverwendet und die Edelmetalle in an sich bekannter Weise weiterverarbeitet werden.

Die in der sauren Lösung gelösten Edelmetalle Rhodium und Platin können jedoch auch von einem unedlen Metall, wie Zink, Aluminium oder Eisen reduziert werden, so dass das Rhodium oder Platin in fester Form aus der Salzsäure ausfällt.

Die Verwendung des beschriebenen Verfahrens beschränkt sich nicht auf die Edelmetalle Rhodium und Platin, sondern findet ganz allgemein Anwendung zur Rückgewinnung von Edelmetallen und anderen Katalysatorsubstanzen, wie Vanadium, Molybdän, Wolfram, Titan oder ihren Oxiden.

Die beschriebene Vorrichtung zur Rückgewinnung von Katalysatorsubstanzen kann auch mit Elektroden einer anderen Form versehen sein, wie beispielsweise konzentrische Graphitringe, die mit radialen Querstäben aus Graphit miteinander verbunden sind. Diese Form der Elektroden sind zu bevorzugen bei stets gleichbleibender Form des Trägers oder Katalysatorkörpers. Die Elektroden können jedoch auch aus einem elektrisch leitenden, säurebeständigen Kunststoff bestehen, wobei eventuell Graphit oder andere Stoffe zur Erzeugung der notwendigen Leitfähigkeit eingelagert sind.

Für die oben beschriebenen Elektroden können anstatt Graphitwolle ebenso Graphitfasern oder Graphitgewebe verwendet werden.

Das vorstehend beschriebene Verfahren hat den weiteren Vorteil, dass auch die Keramikmonolithe unzerstört zur Wiederverwendung, d.h. zur erneuten Belegung mit Katalysatorsubstanzen, zur Verfügung stehen.

Es ist zudem denkbar, dass die nach dem Verfahren nach Anspruch 1 gewonnene Katalysatorsubstanzen enthaltende Lösung, nach einer Analyse - und der Zugabe weiterer Stoffe, zur Neubelegung von Katalysatorkörpern Verwendung findet. Damit wird ein echtes Recycling von Katalysatoren möglich.

## Patentansprüche

1. Rückgewinnungsverfahren für Katalysatoren welche einen aus einem Trägermaterial bestehenden Katalysatorkörper (1) mit darauf aufgebrachten Katalysatorsubstanzen aufweisen, dadurch gekennzeichnet, dass die Katalysatorsubstanzen durch eine niederfrequente Wechselspannung elektrolytisch von dem in einer sauren Lösung (3) eingetauchten Katalysatorkörper (1) gelöst werden, und wobei die gelösten Katalysatorsubstanzen und/oder der Katalysatorkörper (1) zurückgewonnen werden.

2. Verfahren nach Anspruch 1, dadurch gekennzeichnet, dass eine Wechselspannung mit einer konstanten Frequenz in einem Bereich von 20 bis 120 Hz in direkten galvanischen Kontakt an die auf dem Katalysatorkörper (1) befindlichen Katalysatorsubstanzen angelegt wird.

3. Verfahren nach Anspruch 2, dadurch gekennzeichnet, dass eine Wechselspannung mit einer Spannungsamplitude von höchstens 10 Volt an die Katalysatorsubstanzen angelegt wird.

4. Verfahren nach Anspruch 3, dadurch gekennzeichnet, dass nur die Halbwellen der Wechselspannung an die Katalysatorsubstanzen angelegt werden.

5. Verfahren nach einem der Ansprüche 1 bis 4, dadurch gekennzeichnet, dass der Katalysatorkörper (1) in eine wässrige, saure Lösung (3) aus Salpetersäure, Schwefelsäure, Salzsäure oder Flussäure, oder Mischungen davon, eingetaucht wird.

6. Verfahren nach Anspruch 5, dadurch gekennzeichnet, dass der Katalysatorkörper (1) in eine wässrige, saure Lösung (3) mit einer Säurekonzentration von 4 bis 10 N, eingetaucht wird.

7. Verfahren zur Rückgewinnung von auf einem keramischen Trägermaterial aufgebrachten katalysierenden Edelmetallen, nach einem der Ansprüche 1 bis 6, dadurch gekennzeichnet, dass der Katalysatorkörper (1) vor der Elektrolyse von seiner Hülle befreit und entfettet und gereinigt wird.

8. Verfahren zur Rückgewinnung von katalysierenden Edelmetallen nach Anspruch 7, dadurch gekennzeichnet, dass der Katalysatorkörper (1) mit heissem Tetrachloräthylen und/oder mit Wasser und einem zugefügten Netzmittel gereinigt wird.

9. Verfahren zur Rückgewinnung von katalysierenden Edelmetallen nach Anspruch 7, dadurch gekennzeichnet, dass der Katalysatorkörper (1) mittels Ultraschall in einem Lösungsmittel-Bad gereinigt wird.

10. Verfahren zur Rückgewinnung von katalysierenden Edelmetallen nach einem der Ansprüche 7 bis 9, dadurch gekennzeichnet, dass nach der Elektrolyse die mit Edelmetallen angereicherte saure Lösung (3) durch ein unedles Metall, wie Zink, Aluminium oder Eisen reduziert wird, so dass die Edelmetalle aus der sauren Lösung (3) ausgefällt werden.

11. Verfahren nach einem der Ansprüche 1 bis 9, dadurch gekennzeichnet, dass nach der Elektrolyse die in der sauren Lösung (3) gelösten Katalysatorsubstanzen mit einem Ionenaustauscherharz gebunden werden, welches anschliessend verbrannt wird, wobei die Katalysatorsubstanzen in fester Form zurückbleiben.

12. Verfahren nach einem der Ansprüche 1 bis 9, dadurch gekennzeichnet, dass nach der Elektrolyse die in der sauren Lösung (3) gelösten Katalysatorsubstanzen mit einem Ionenaustauscherharz gebunden werden, welches anschliessend mit einem gelösten Komplex- oder Chelatbildner eluiert wird, wodurch die Katalysatorsubstanzen aufkonzentriert werden und für die weitere Verarbeitung und/oder Aufbereitung zur Verfügung stehen.

13. Vorrichtung zur Rückgewinnung von Katalysatoren, welche einen aus einem Trägermaterial bestehenden Katalysatorkörper (1) mit darauf aufgebrachten Katalysatorsubstanzen aufweisen, nach dem Verfahren der Ansprüche 1 bis 12, dadurch gekennzeichnet, dass diese Vorrichtung aus einem Elektrolyse-Gefäss (2) und den darin enthaltenen zu behandelnden Katalysatoren besteht, wobei in dem Elektrolyse-Gefäss (2) zwei Elektroden (8; 8') vorgesehen sind, die von einer sauren Lösung (3) chemisch nicht angreifbar sind und an die Form des Katalysatorkörpers (1) angepasst und/oder derart verformbar sind, dass sie an die Form des Katalysatorkörpers (1) anpassbar sind, wobei die Elektroden (8; 8') an eine niederfrequente Wechselspannungsquelle angeschlossen und in direktem galvanischen Kontakt mit den auf dem Katalysatorkörper (1) befindlichen Katalysatorsubstanzen treten.

14. Vorrichtung nach Anspruch 13, dadurch gekennzeichnet, dass die Elektroden (8) aus Graphitwolle, Graphitfasern oder Graphitgewebe und/oder Graphitstäben (10) bestehen.

15. Vorrichtung nach Anspruch 13 oder 14, dadurch gekennzeichnet, dass wenigstens eine der Elektroden (8') eine den Katalysatorkörper (1) einseitig belegende Lochplatte (16) aus Graphit ist, welche horizontal in dem Elektrolyse-Gefäss (2) angeordnet ist und Erhebungen (17) aufweist, die mit den Katalysatorsubstanzen in direkten galvanischen Kontakt treten.

16. Vorrichtung nach einem der Ansprüche 13 bis 15, dadurch gekennzeichnet, dass am Elektrolyse-Gefäss (2) eine den Elektrolyten (3) umwälzende Pumpe (6), wie eine peristaltische Pumpe, vorgesehen ist.

17. Vorrichtung nach Anspruch 16, dadurch gekennzeichnet, dass vor der Pumpe (6) eine Ableitung (14) vorgesehen ist, die einen Teil der sauren Katalysatorsubstanzen aufweisende Lösung (3) für die weitere Aufarbeitung abführt, und dass nach der Pumpe (6) eine Zuleitung (15) vorgesehen ist, die denselben Teil an frischer saurer Lösung (3) wieder der Elektrolyse zuführt.

## Claims

1. Process for the recovery of catalysts which consist of a catalyst body (1) with catalyst substances deposited onto it, characterised in that the catalyst substances are dissolved electrolytically by an alternating voltage of low frequency from the catalyst body (1) immersed in an acid solution whereby the dissolved catalyst substances and/or catalyst bodies are recovered.

2. Process according to claim 1, characterised in that an alternating voltage with a constant frequency in a range of 20 to 120 Hz is brought in a direct galvanical contact with the catalyst substances deposited onto the catalyst body (1).

3. Process according to claim 2, characterised in that an alternating voltage with a voltage amplitude of at most 10 volt is applied to the catalyst substances.

4. Process according to claim 3, characterised in that only the half-waves of the alternating voltage are applied to the catalyst substances.

5. Process according to one of the claims 1 to 4, characterised in that the catalyst body (1) is immersed in an aqueous acid solution (3) containing nitric acid, sulfuric acid, hydrochloric acid or hydrofluoric acid or mixtures thereof.

6. Process according to claim 5, characterised in that the catalyst body (1) is immersed in an aqueous acid solution (3) with an acid concentration of from 4 to 10 N.

7. Process for the recovery of catalysing noble metals deposited onto a ceramic carrier material according to one of the claims 1 to 6, characterised in that the catalyst body (1) is freed from its covering before electrolysis takes place and is subsequently degreased and cleaned.

8. Process for the recovery of catalysing noble metals according to claim 7, characterised in that the catalyst body (1) is cleaned by means of hot tetrachloroethylene and/or water and an added tenside.

9. Process for the recovery of catalysing noble metals according to claim 7, characterised in that the catalyst body (1) is cleaned by means of ultrasound in a solvent bath.

10. Process for the recovery of catalysing noble metals according to claims 7 to 9, characterised in that after electrolysis the acid solution (3) enriched with noble metals is reduced by means of base metals like zinc, aluminium or iron to precipitate the noble metals from the acid solution (3).

11. Process according to one of the claims 1 to 9, characterised in that after electrolysis the catalyst substances dissolved in the acid solution (3) are bound onto an ion exchange resin which is subsequently burned whereby the catalyst substances stay residual.

12. Process according to one of the claims 1 to 9, characterised in that after electrolysis the catalyst substances dissolved in the acid solution (3) are bound onto an ion exchange resin, which is subsequently eluted with dissolved complexing or chelating agents, whereby the catalyst substances are concentrated and kept at disposal for further processing and/or work up.

13. Device for the recovery of catalysts which consist of a catalyst body (1) with catalyst substances deposited onto it according to the process of claims 1 to 12, characterised in that the device consists of an electrolysis vessel (2) and the catalyst to be treated contained therein, whereby in the electrolysis vessel (2) two electrodes (8, 8') are provided which are chemically not attacked by acid solution and are adjusted to fit to the form of the catalyst body (1) and/or are workable in a way to be adjustable to the form of the catalyst body (1) whereby the electrodes (8, 8') are connected to an alternating voltage of low frequency and are in a direct galvanic contact with the catalyst substances deposited onto the catalyst's body (1).

14. Device according to claim 13, characterised in that the electrodes (8) consist of graphite wool, graphite fibres or graphite tissue and/or graphite rods.

15. Device according to claim 13 or 14, characterised in that at least one of the electrodes (8') is an apertured plate (16) made of graphite which covers one side of the catalyst body (1) arranged horizontally in the electrolysis vessel (2) and has elevations which come in direct galvanic contact with the catalyst substances.

16. Device according to one of the claims 13 to 15, characterised in that on the electrolysis vessel (12) a pump (6) is foreseen for circulating the electrolyte (3) e.g. a peristaltic pump.

17. Device according to claim 16, characterised in that before the pump (6) a conduct line (14) is foreseen for draining a part of the solution containing the acid catalyst substances for further work up and that behind the pump (6) a feed line (15) is foreseen which supplies the electrolysis with the same amount of fresh acid solution.

## Revendications

1. Procéde de récupération pour catalyseurs, lesquels présentent un corps de catalyseur (1), consistant d'un matériel-porteur avec des substances de catalyseur appliqués sur ceci, et étant caractérisé en ce que les substances des catalyseurs sont dissous électrolytiquement, par une tension alternative à basse fréquence, du corps du catalyseur (1) immergé dans une solution acide (3), ainsi récupérant les substances du catalyseur et/ou le corps du catalyseur (1).

2. Procédé selon la revendication 1, caractérisé en ce qu'une tension alternative avec une fréquence constante du régime de 20 à 120 Hz. est raccordée, en contact galvanique directe, aux substances des catalyseurs appliquées sur le corps du catalyseur (1).

3. Procédé selon la revendication 2, caractérisé en ce qu'une tension alternative avec une amplitude de tension de 10 Volt au maximum est appliquée aux substances des catalyseurs.

4. Procédé selon la revandication 3, caractérisé en ce que les demi-ondes seul de la tension alternative sont appliquées aux substances des catalyseurs.

5. Procédé selon une des revendications de 1 à 4, caractérisé en ce que le corps du catalyseur (1) est immergé dans une solution acide aqueuse (3) préparée de l'acide nitrique, de l'acide sulphurique, de l'acide chlorhydrique ou de l'acide fluorhydrique, ainsi que des mélanges de ces acides.

6. Procédé selon la revendication 5, caractérisé en ce que le corps du catalyseur (1) est immergé dans une solution acide acqueuse (3) avec une concentration de l'acide de 4 N à 10 N.

7. Procédé pour la récupération des métaux précieux catalysants, apportés sur un matériel-porteur céramique selon une des revendications de 1 à 6, caractérisé en ce que le corps du catalyseur (1) est libéré, avant l'électrolyse, de son chemise et ensuite dégraissé et nettoyé.

8. Procédé pour la récupération de métaux précieux catalysants selon la revendication 7, caractérisé en ce que le corps du catalyseur (1) est nettoyé avec du tétrachlorure d'éthyléne chaud et/ou de l'eau avec un agent humidificatur additionné.

9. Procédé pour la récupération de métaux précieux catalysants selon la revendication 7, caractérisé en ce que le corps du catalyseur (1) est nettoyé par ultra-sons dans un bain de solvant.

10. Procédé pour la récupération de métaux précieux catalysants selon une des revendications de 1 à 9, caractérisé en ce qu'après l'électrolyse la solution acide (3), enrichie de métaux précieux, est réduite par un métal commun, comme le zinc, l'aluminium ou le fer, de manière que les métaux précieux sont précipités de la solution acide (3).

11. Procédé selon une des revendications de 1 à 9, caractérisé en ce qu'après l'électrolyse les substances des catalyseurs, dissous dans la solution acide (3), sont liées à un échangeur d'ions sous forme de résine lequel est ensuite brûlé, laissant les substances des catalyseur sous forme solide.

12. Procédé selon une des revendications de 1 à 9, caractérisé en ce qu'après l'électrolyse les substances des catalyseurs, dissous dans la solution acide (3), sont liées à un échangeur d'ions sous forme de résine, lequel est ensuite élué par un formateur de complex ou de chélation ainsi concentrant les substances des catalyseurs lesquelles restent à la disposition en vue d'une transfor-mation et/ou d'un traitement ultérieur.

13. Appareil pour la récupération de catalyseurs, lequelles présente un corps de catalyseur (1), consistant d'un matériel-porteur, avec les substances de catalyseur appliquées au-dessus du celui-ci d'après le procédé décrite par les revendications de 1 à 12, caractérisé en ce que cet appareil consiste d'un récipient électrolytique (2) et les catalyseurs à traiter y contenus, ledit récipient électrolytique (2) étant prévu de deux électrodes (8, 8') chimiquement inattaquables par une solution acide (3) et adaptées à la ligne du corps du catalyseur (1) et/ou déformables de telle façon qu'on les peut adapter à la forme du corps du catalyseur (1), les électrodes (8, 8') étant raccordées à une source de tension alternative à basse fréquence et entrant en contact galvanique direct avec les substances du catalyseur qui se trouvent sur le corps du catalyseur (1).

14. Appareil selon la revendication 13, caractérisé en ce que les électrodes (8) consistent de laine de graphite, de fibres de graphite ou d'un tissu de graphite et/ou des baguettes de graphite.

15. Appareil selon la revendication 13 ou 14, caractérisé en ce que au moins une desdites électrodes (8') est une plaque perforée (16) de graphite, laquelle couvre d'un seul côté le corps du catalyseur (1), placée en position horizontale dans le récipient électrolytique (2) et présentant des élévations (17) lesquelles entrent en contact galvanique direct avec les substances des catalyseurs.

16. Appareil selon une des revedications de 13 à 15, caractérisé en ce que le récipient électrolytique (2) est prévu d'une pompe (6), comme une pompe péristaltique, laquelle fait circuler l'électrolyte (3).

17. Appareil selon la revendication 16, caractérisé en ce que la pompe (6) est prévue d'une derivée pour l'évacuation d'une part de la solution (3) avec les substances acide des catalyseurs, en vue d'un traitement ultérieur, et que derrière de la pompe (6) se trouve une amenée (15) laquelle alimente l'électrolyse avec la même quantité d'une solution acide fraiche.
